# EUROPÄISCHE PATENTSCHRIFT

(11) **EP 2 361 859 B1**
(45) Veröffentlichungstag und Bekanntmachung des Hinweises auf die Patenterteilung: **26.11.2014**
(21) Anmeldenummer: 11154604.0
(22) Anmeldetag: 16.02.2011
(51) Int. Cl.: B65G 47/26, B21D 28/02, B21D 43/00, B21D 28/06, B21D 43/12, B23Q 7/16

(54) **Vorrichtung zum Vergrößern eines Querabstandes zwischen Werkstücken**
Device for increasing a transverse gap between workpieces
Dispositif d'augmentation d'un intervalle transversal entre des pièces

(30) Priorität: 26.02.2010 DE 102010002391
(43) Veröffentlichungstag der Anmeldung: 31.08.2011
(73) Patentinhaber: Schober GmbH Holding, 71733 Eberdingen (DE)
(72) Erfinder: Wittmaier, Klaus, 71665 Vaihingen (DE)
(74) Vertreter: DREISS Patentanwälte PartG mbB

(56) Entgegenhaltungen:
- EP-A1- 0 212 027
- EP-A1- 1 279 950
- EP-A2- 0 287 845
- DE-A1- 19 751 967
- GB-A- 993 998
- JP-A- 1 051 177

## Beschreibung

Die Erfindung betrifft eine Vorrichtung zum Erzeugen eines Querabstandes für und zum Abführen von aus einer Stanze kommenden Werkstücken, wobei die abzuführenden Werkstücke in mindestens zwei in Transportrichtung parallelen Reihen hintereinander ablegt werden und die Reihen in Transportrichtung versetzt sind, und insbesondere die Transportgeschwindigkeit aller Reihen gleich ist, mit den Merkmalen des Oberbegriffs des Anspruchs 1.

Bei Hub- oder Rotationsstanzen, die aus einem Materialband Werkstücke ausstanzen, müssen fast alle auszustanzenden Produkte, außer rechteckige Produkte, in versetzten, vernesteten oder verschachtelten Positionen ausgestanzt werden, um Rohmaterial einzusparen. Um die gestanzten Teile maschinell fließend weiterzufördern, beispielsweise um sie dann endgültig zu stapeln oder weiterzuverarbeiten, ist es bekannt, diese versetzten Werkstücke in entweder zwei Ebenen weiterzuverarbeiten oder diese in gespreizter und aufgefächerter Anordnung weiterzuführen, so dass zwischen den einzelnen Werkstücken so viel Platz vorhanden ist, dass sie vereinzelt weiterverarbeitet werden können. Bekannte Vorrichtungen zur Weiterbeförderung bzw. Weiterverarbeitung von auf einem Band transportierten Werkstücken in versetzter Anordnung sind daher verhältnismäßig aufwändig. Außerdem benötigen sie viel Platz, so dass durch diese Vorrichtungen die gesamte Maschinenanlage verhältnismäßig lang wird. Aus der EP 0 338 297 A2 ist eine Vorrichtung bekannt, bei der die verschachtelt angeordneten Werkstücke in parallelen Reihen und Spalten aufgelöst werden. Diese Vorrichtung ist aber nur für in einem bestimmten Muster angeordnete Werkstücke einsetzbar und die Werkstücke ändern bei der Übergabe vom einen zum anderen Transportband ihre Position und vor allem ihre Drehlage. Außerdem ist die Position geschwindigkeitsabhängig, das die Werkstücke bei der Übergabe ihre Transportrichtung ändern. Weitere Vereinzelungsvorrichtungen sind aus der DE 35 15 238 A1, der DE 1 556 716 A, der AT 230 302, der US 2,371,877 A und der US 2,571,790 A bekannt. Bei diesen Vorrichtungen ändern die Werkstücke ihre Position und Drehlage bei der Übergabe ebenfalls.

Aus der EP 0 287 845 A2 ist eine Vorrichtung zum Transport eines Behälterstroms mit einem Zuförderer, einem Abförderer und einer dazwischen angeordneten Übergangsstrecke bekannt. Der Abförderer besitzt eine größere Transportgeschwindigkeit als der Zuföderer, so dass die transportierten Behälter ab der Übergangsstrecke vereinzelt werden. Da für die Vorrichtung zwei Förderstrecken, nämlich der Zuförderer und der Abförderer und dazwischen die Übergangsstrecke erforderlich sind, ist der Aufbau komplex und aufwändig.

Der Erfindung liegt die Aufgabe zugrunde, eine Vorrichtung zur Förderung von ursprünglich versetzt angeordneten Werkstücken zu entwickeln, bei der die Werkstücke nach der Vereinzelung lagerichtig und positionsgenau angeordnet sind.

Diese Aufgabe wird mit einer Vorrichtung gelöst, die die Merkmale des Anspruchs 1 aufweist.

Um die Position und Drehlage der Werkstücke auf den Kettengliedern sicherzustellen, sind auf der Gliederkette Mittel vorgesehen, die den Reibschluss zum Werkstück erhöhen oder die einen Formschluss mit dem Werkstück ermöglichen. Dies wird entweder mittels einer rauen Oberfläche, mittels Nadeln oder dergleichen erreicht. Es können auch Festanschläge oder Aufnahmenäpfe (Nester) vorgesehen sein.

Ein wesentlicher Vorteil der Erfindung besteht darin, dass die Werkstücke, die in der Aufnahmestation aufgenommen werden, in der Ablagestation lagerichtig abgelegt werden. Dies bedeutet, dass nicht nur ihre Position sondern auch ihre Drehstellung um den Mittelpunkt korrekt ist. Da die Werkstücke sowohl in der Aufnahmestation als auch in der Ablagestation in Transportrichtung aufgenommen bzw. abgelegt werden, behalten sie ihre Position und Drehlage bei. Die Werkstücke können also nach der Freigabe aus der Ablagestation sofort weiterverarbeitet oder weitertransportiert werden, ohne dass Positions- oder Drehlagekorrekturen erforderlich sind. Außerdem kommt es auch bei hohen Transportgeschwindigkeiten von bis zu 120 m/s zu keinen seitlichen Positionsverschiebungen, da die Werkstücke sowohl in der Aufnahmestation als auch in der Abgabestation in Transportrichtung aufgenommen als auch abgegeben werden.

Um einen größeren seitlichen Abstand zu erhalten, müssen die randseitigen Werkstücke weiter zur Seite transportiert werden, als Werkstücke, die näher zur Mitte liegen. Hierfür sind die Gliederketten in Transportrichtung längenvariabel und horizontal und vertikal kurvengängig ausgebildet. Die einzelnen Kettenglieder besitzen also ein gewisses Maß an Spiel, so dass die Gliederkette längenvariabel ist. Um zwischen der Aufnahmestation und der Abgabestation Richtungsänderungen zu vollziehen, ist die Gliederkette kurvengängig.

Bei einem bevorzugten Ausführungsbeispiel der Erfindung weist bei wenigstens einer Gliederkette der zwischen der Aufnahmestation und der Abgabestation sich befindende Transportabschnitt einen S-förmigen Verlauf auf. Auf diese Weise könnten die Werkstücke aufgefächert werden, ohne dass die Werkstücke ihre Drehlage ändern.

Die Auffächerung bedingt aber auch, dass zwei benachbarte Transportabschnitte ungleich lang sind. Dies wird entweder dadurch erreicht, dass die Gliederkette längenvariabel ist, oder dass die Gliederkette im längeren Transportabschnitt wenigstens ein Kettenglied mehr aufweist.

Bei einem besonders bevorzugten Ausführungsbeispiel der Erfindung befinden sich alle Abgabestationen auf einer quer zur Transportrichtung liegenden Linie, insbesondere liegen sie rechtwinklig zur Transportrichtung. Unabhängig davon, wie eng und versetzt zueinander die Werkstücke die Stanzvorrichtung verlassen, liegen sie in parallelen Reihen und nebeneinander in Querrichtung, d.h. 90° zu Transportrichtung, so dass sie entweder einer Weiterverarbeitung zugeführt oder verpackt werden können.

Um eine sichere Fixierung der Werkstücke auf den Gliederketten sicherzustellen, weisen die Gliederketten eine Vielzahl von Kettengliedern auf, und sind die Kettenglieder mit Durchbrüchen versehen, so dass sie von Luft durchströmbar sind. Unterhalb der Gliederkette ist vorteilhaft ein Saugmodul vorgesehen, welches Luft durch die Gliederkette hindurchsaugt und dadurch die Werkstücke auf die Gliederkette ansaugt. Die Werkstücke werden zum einen sicher transportiert, zum anderen behalten sie auch nach einem Transport im Raum, bei dem sie mitunter Kurven durchfahren, ihre ursprüngliche Position und ursprüngliche Drehlage bezüglich desjenigen Kettengliedes bei, auf welches das Werkstück in der Aufnahmestation aufgelegt wurde.

Da die Aufnahmestation und die Abgabestation einer jeder Gliederkette die gleiche Transportgeschwindigkeit aufweisen, können an sich unelastische Gliederketten verwendet werden, wobei lediglich erforderlich ist, dass benachbarte Kettenglieder ein Spiel in Längsrichtung der Gliederkette besitzen.

Erfindungsgemäß weisen bei einem bevorzugten Ausführungsbeispiel benachbarte Aufnahmestationen unterschiedliche Transportgeschwindigkeiten auf. Dabei ist die Transportgeschwindigkeit von randseitigen Aufnahmestationen größer als die von in der Mitte liegenden Aufnahmestationen.

Bei einer Weiterbildung der Erfindung ist vorgesehen, dass im Anschluss an die Abgabestation eine Beschleunigungsvorrichtung für die Werkstücke vorgesehen ist. Sollten die Werkstücke nach dem Verlassen der Ablagestation nicht nebeneinander quer zur Transportrichtung liegen, dann werden sie über die Beschleunigungsvorrichtung gegen einen Festanschlag beschleunigt und ausgerichtet.

Erfindungsgemäß verläuft der das Werkstück tragende Transportabschnitt der Gliederkette in der Ebene oder im Raum. Auf diese Weise können die geschachtelt angeordneten Werkstücke aufgefächert werden. Es können aber auch für alle die Aufnahmestationen mit den Abgabestationen verbindenden Transportabschnitte gleich lange Abschnitte verwendet werden, so dass die Transportgeschwindigkeit für alle Transportabschnitte gleich ist. Die randseitigen Transportabschnitte werden in der Ebene und die mittleren Transportabschnitte im Raum ausgeschwenkt.

Durch die Verwendung eines Saugmoduls besteht die Möglichkeit, dass das Werkstück unterhalb, oberhalb oder seitlich an einem das Werkstück tragenden Transportabschnitt der Gliederkette anliegt. Die Werkstücke können also auch über Kopf transportiert werden, falls dies erforderlich sein sollte. Dabei bleibt die Position und Drehlage der Werkstücke bezüglich der Gliederkette oder des Kettengliedes unverändert.

Bei einer Weiterbildung ist vorgesehen, dass die Gliederketten mit gleichbleibender oder mit wechselnder Geschwindigkeit angetrieben werden. Durch Beschleunigung und/oder Abbremsung befinden sich die Werkstücke zum gewünschten Zeitpunkt am gewünschten Ort und weisen den gewünschten Abstand zueinander auf, so dass sie problemlos weiterverarbeitet werden können.

Um eine definierte Situation bei der Aufnahme und bei der Abgabe der Werkstücke zu erzielen ist vorgesehen, dass die Gliederketten sowohl in der Aufnahmestation als auch in der Abgabestation angetrieben werden. Hierfür werden synchronisierte Elektroantriebe oder mechanische Verbindungsteile verwendet.

Weitere Vorteile, Merkmale und Einzelheiten der Erfindung ergeben sich aus den Unteransprüchen sowie der nachfolgenden Beschreibung, in der unter Bezugnahme auf die Zeichnung besonders bevorzugte Ausführungsbeispiele im Einzelnen beschrieben sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1:: eine Draufsicht auf eine Ausführungsform der Erfindung;
- Figuren 2a bis 2c:: verschiedene Geometrien der zu vereinzelnden Werkstücke;
- Figur 3:: einen Schnitt III - III durch die Vorrichtung gemäß Figur 1; und
- Figur 4:: eine Ansicht gemäß Figur 3 mit Mitnehmern an der Gliederkette.

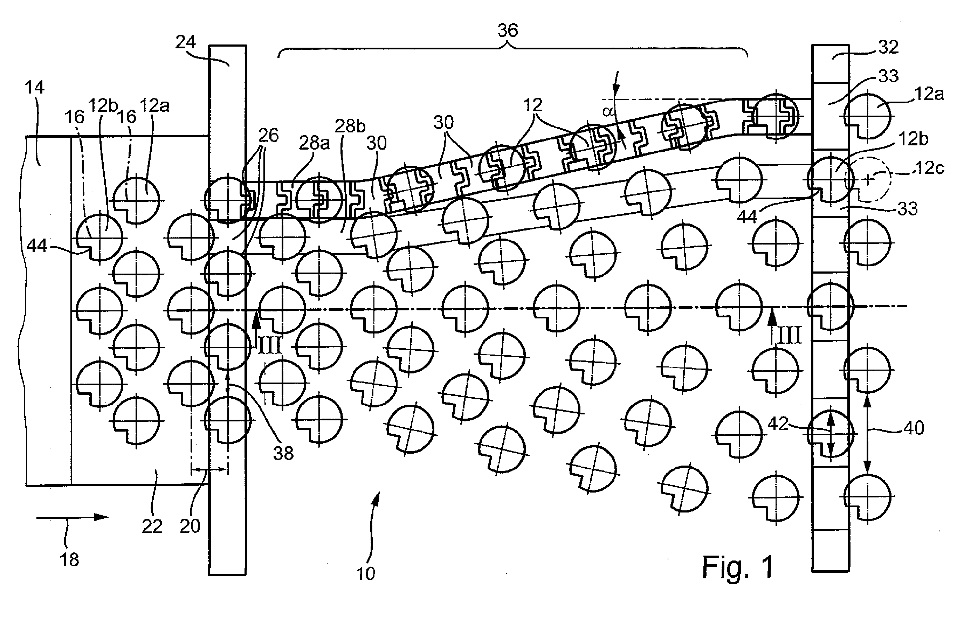

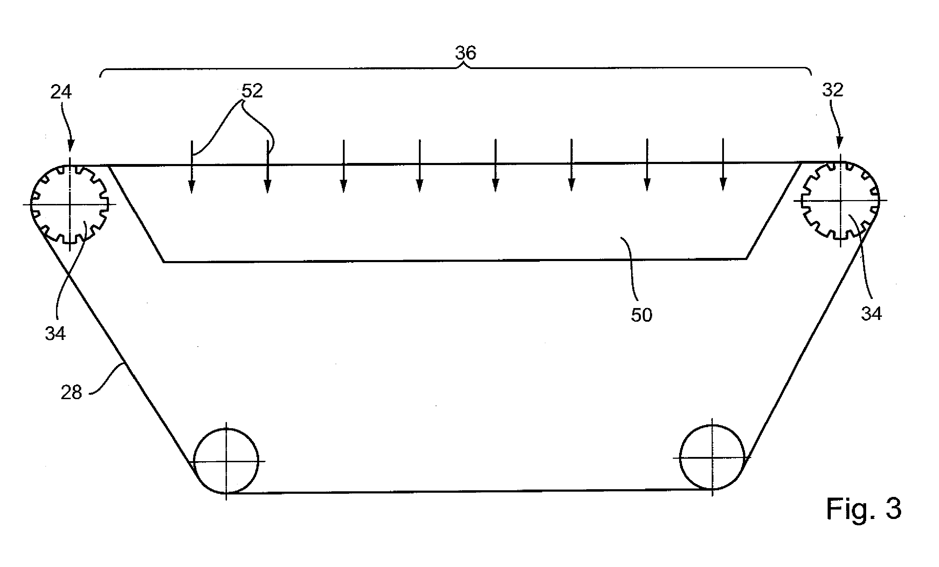

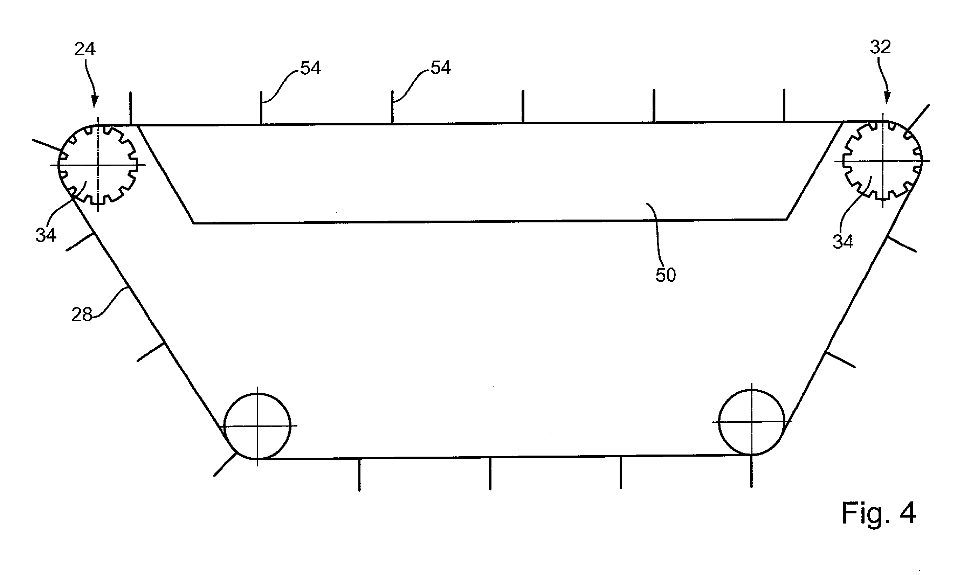

Die Figur 1 zeigt eine Draufsicht auf die erfindungsgemäße Vorrichtung 10, mit welcher Werkstücke 12 vereinzelt und abgeführt werden können. Diese Werkstücke 12 stammen von einer (nicht dargestellten) Stanze oder Stanzvorrichtung, wo sie platzsparend und abfallminimiert aus einem Bahnmaterial 14 ausgestanzt werden. Die Werkstücke 12 sind in mehreren, parallel zueinander liegenden Reihen 16 angeordnet, wobei die Reihen 16 in bzw. parallel zur Transportrichtung 18 ausgerichtet sind. Außerdem sind die Reihen 16 abwechselnd um einen Versatz 20 in Transportrichtung 18 versetzt, wodurch die verschachtelte Anordnung der Werkstücke 12 ermöglicht wird. Nach dem Entfernen des Stanzgitters liegen die einzelnen Werkstücke 12 in verschachtelter Anordnung auf einem Transportband 22 auf und werden einer Aufnahmevorrichtung 24 zugeführt, die eine Vielzahl von Aufnahmestationen 26 aufweist. In diesen Aufnahmestationen 26 werden die Werkstücke 12 jeweils einer Gliederkette 28 übergeben, mit welcher die Werkstücke 12 aus der Aufnahmevorrichtung 24 abtransportiert werden. Jede Gliederkette 28 wird von einer Vielzahl von Kettengliedern 30 gebildet, wobei die Kettenglieder 30 bezüglich des jeweils benachbarten Kettenglieds 30 in allen drei Dimensionen beweglich ist. Dies bedeutet, dass zwei benachbarte Kettenglieder 30 in Transportrichtung 18 ein Spiel aufweisen, und dass die Gliederkette 28, wie in der Figur 1 dargestellt, kurvengängig ist. Dabei wird die Gliederkette 28 von seitlichen (nicht dargestellten) Führungen geführt. Außerdem umschlingt die Gliederkette 28 im Bereich der Aufnahmevorrichtung 24 und im Bereich einer Abgabevorrichtung 32 Antriebselemente 34, was in den Figuren 3 und 4 dargestellt ist.

Wie aus der Figur 1 deutlich erkennbar, verläuft die mittlere Reihe 16 und somit die mittlere Gliederkette 28, die der Übersichtlichkeit halber nicht dargestellt ist, geradlinig und in Transportrichtung 18. Die neben dieser mittleren Gliederkette 28 sich befindenden anderen Gliederketten 28a weisen einen S-förmigen Verlauf auf, wobei der in der Aufnahmevorrichtung 24 sich befindende Anfangsabschnitt und der in der Abgabevorrichtung 32, insbesondere in deren Abgabestationen 33, sich befindende Endabschnitt der Gliederketten 28 jeweils parallel zur Transportrichtung 18 verläuft. Der jeweils dazwischen liegende Transportabschnitt 36 schließt einen von 0° verschiedenen Winkel α zur Transportrichtung 18 ein, wobei deutlich erkennbar sind, dass die Transportabschnitte 36 von der Aufnahmevorrichtung 24 in Richtung der Abgabevorrichtung 32 aufgefächert sind und die Winkel α von der Mitte zum Rand hin zunehmen. Auf diese Weise wird erreicht, dass die einzelnen Werkstücke 12 in Querrichtung, das heißt quer zur Transportrichtung 18, so weit voneinander beabstandet werden, dass zwischen Ihnen ein weiteres Werkstück 12 angeordnet werden kann. Der Abstand 38 wird auf den Querabstand 40 vergrößert, wobei dieser Querabstand 40 größer ist als die Querabmessung und insbesondere der Durchmesser 42 des Werkstücks 12. Somit können die Werkstücke 12 ohne Versatz zueinander in einer Auslage nebeneinander und quer zur Transportrichtung 18, das heißt rechtwinklig zu dieser, angeordnet werden.

Ein wesentlicher Vorteil der erfindungsgemäßen Vorrichtung besteht darin, dass die Werkstücke 12 von der Gliederkette 28 zwischen der Aufnahmevorrichtung 24 und der Abgabevorrichtung 32 positionsgenau und ohne Veränderung der Drehlage transportiert werden. Dies ist in der Figur 1 daran erkennbar, dass der sich im dritten Quadranten befindende Ausschnitt 44 des Werkstücks 12 auch nach dem Transport durch die Vorrichtung 10 im dritten Quadranten befindet. Die Positions- und Drehlagegenauigkeit wird dadurch gewährleistet, dass die Werkstücke 12 sowohl in der Aufnahmevorrichtung 24 als auch in der Abgabevorrichtung 32 in Transportrichtung 18 auf die Gliederketten 28 aufgesetzt und von dieser wieder abgenommen werden. Die Werkstücke 12 können also direkt ohne Korrektur ihrer Position und Drehlage nach der Abgabe weiterverarbeitet werden. Weiterhin ist anzumerken, dass die Transportabschnitte 36 länger werden, je weiter sie von der Mitte entfernt sind. Dieser Längenunterschied wird durch das Spiel zwischen den einzelnen Kettengliedern 30 ausgeglichen. Falls erforderlich wird ein zusätzliches Kettenglied 30 in die Gliederkette 32 eingefügt. Außerdem ist die Transportgeschwindigkeit bei jeder Gliederkette 28 im Bereich der Aufnahmevorrichtung 24 gleich wie die Transportgeschwindigkeit im Bereich der Abgabevorrichtung 32. Sind die Transportgeschwindigkeiten aller Gliederketten 28 gleich, dann werden die Werkstücke 12, wie in der Figur 1 dargestellt, transportiert, aufgefächert und ausgelegt.

Es besteht aber auch die Möglichkeit, die Transportgeschwindigkeit der jeweils zweiten Gliederkette 28b so zu erhöhen, dass das in der Aufnahmevorrichtung 24 zum Werkstück 12a benachbarte Werkstück 12b in der Abgabevorrichtung 32 direkt neben dem Werkstück 12a zu liegen kommt, was mit dem Werkstück 12c mit gestrichelter Linie angedeutet ist. Die Werkstücke 12 werden dann nicht nur in Querrichtung verlagert, sondern auch in Querrichtung in einer Linie ausgerichtet.

Eine andere Möglichkeit zur Ausrichtung der Werkstücke 12 in Querrichtung besteht darin, dass die von der Abgabevorrichtung 32 noch versetzt abgegebenen Werkstücke 12 anschließend eine Beschleunigereinheit durchlaufen, in welcher entweder alle Werkstücke 12 oder nur die nacheilenden Werkstücke 12b beschleunigt werden. Dies kann ebenfalls mittels einer (nicht dargestellten) Gliederkette erfolgen. Die beschleunigten Werkstücke 12 können dann von einem Festanschlag abgebremst werden.

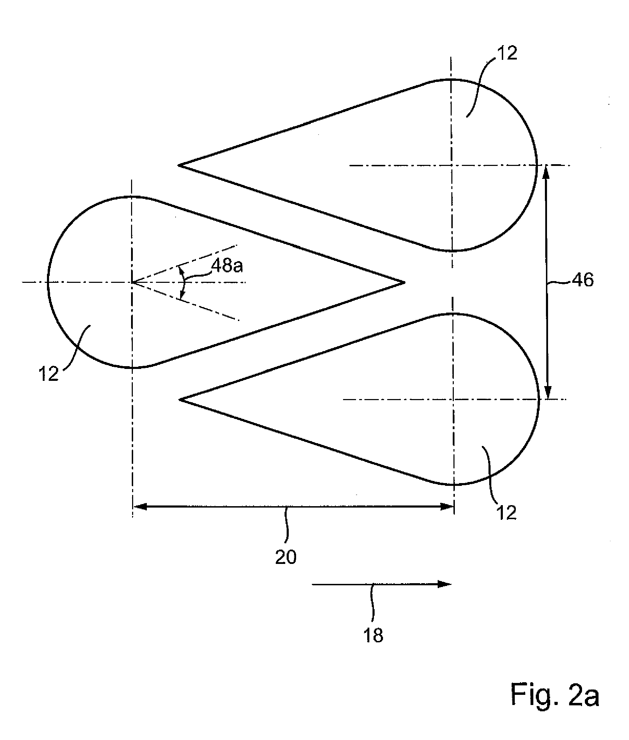

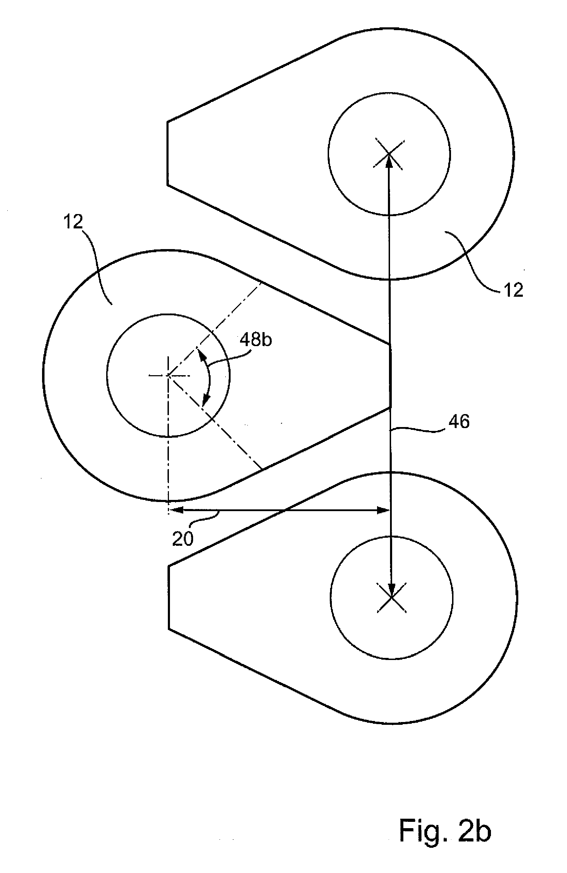

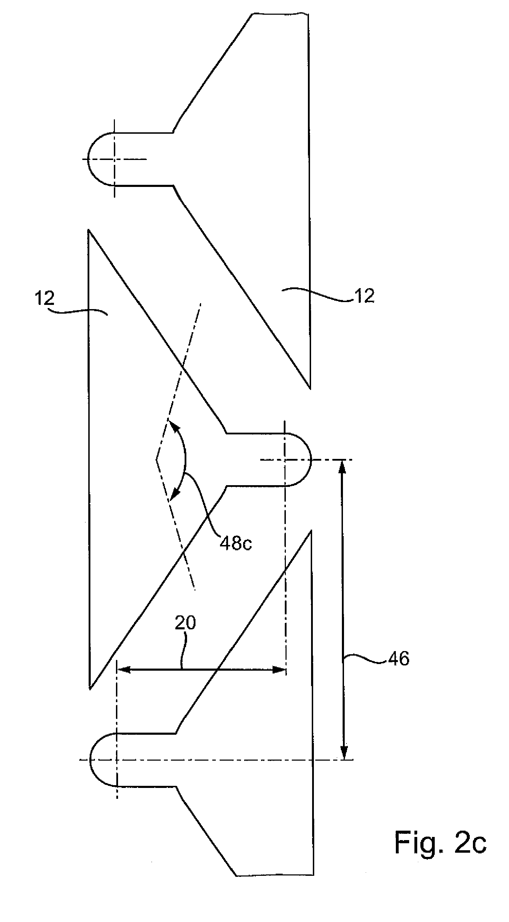

In den Figuren 2a bis 2c sind Beispiele für unterschiedliche Werkstücke 12 dargestellt, wobei deren Form die platzsparende und abfallminimierte Anordnung auf dem Bahnmaterial 14 bestimmt. Die Figur 2a zeigt ein relativ schlankes Werkstück 12 (z.B. ein Behälterdeckel aus Aluminium mit Aufreißlasche), wobei der Versatz 20 in Transportrichtung 18 zwischen einem vorauseilenden und einem nacheilenden Werkstück 12 bezüglich des Abstandes 46 zweier nebeneinander, quer zur Transportrichtung 18 liegender Werkstücke 12 relativ groß ist. In der Figur 2b sind Werkstücke 12 (z.B. eine Ringscheibe aus Kunststoff) dargestellt, die eine größere Breite aufweisen, so dass bei gleichem Versatz 20 der Abstand 46 wesentlich größer ist. Somit ist auch der Winkel 48b wesentlich größer als der Winkel 48a bei der Anordnung in Figur 2a. In der Figur 2c ist der Versatz 20 relativ klein, wohingegen der Abstand 46 groß ist. Hieraus ergibt sich ein Winkel 48c, der größer ist als der Winkel 48b in der Figur 2b. Diese unterschiedlich großen Winkel 48a bis 48c bestimmen das Maß, wie weit die Gliederketten 28 aufgespreizt werden müssen, um die einzelnen Werkstücke 12 aufzufächern, wobei der Versatz 20 bezogen auf die Länge der Gliederkette 28 zwischen der Aufnahmevorrichtung 24 und der Abgabevorrichtung 32 bestimmt, um welches Maß die Transportgeschwindigkeit für die nacheilenden Werkstücke 12 größer sein muss, so dass alle Werkstücke 12 in der Abgabevorrichtung 32 nicht nur aufgefächert, sondern in Querrichtung nebeneinander zu liegen kommen.

Die Figur 3 zeigt einen Schnitt III - III, wobei die Aufnahmevorrichtung 24 und die Abgabevorrichtung 32 nur angedeutet sind. Mittels der Antriebselemente 34 wird die Gliederkette 28 schlupffrei angetrieben. Die Antriebselemente 34 sind entweder elektrisch oder mechanisch miteinander gekoppelt, so dass sie synchron laufen. Im gesamten Transportabschnitt 36 befindet sich unterhalb der Gliederkette 28, das heißt auf der den Werkstücken 12 gegenüberliegenden Seite, ein insgesamt mit 50 bezeichnetes Saugmodul, mit welchem in Richtung der Pfeile 52 Luft durch die einzelnen Kettenglieder 30 der Gliederkette 28 hindurch angesaugt wird. Da sich auf der Gliederkette 28 die Werkstücke 12 befinden, werden auf diese Weise die Werkstücke 12 an die Gliederkette 28 angesaugt und dadurch schlupffrei festgehalten und fixiert.

Die einzelnen Kettenglieder 30 besitzen (nicht dargestellte) Durchbrüche, durch welche die Luft in Richtung der Pfeile 52 hindurchgesaugt wird. Die Durchbrüche sind in ihren Abmessungen so dimensioniert, dass die Werkstücke 12 optimal unterstützt werden und durch die angesaugte Luft nicht beschädigt werden. Außerdem können die einzelnen Kettenglieder 30 oberseitig mit einem Reibbelag versehen sein, mit welchem der Reibschluss zu den Werkstücken 12 verbessert wird.

In der Figur 4, die im Wesentlichen der Figur 3 entspricht, weist die Gliederkette 28 Mitnahmeelemente 54 auf, so dass die einzelnen Werkstücke 12 auch formschlüssig transportiert werden. Die Mitnahmeelemente 54 können von Stegen, Zapfen, anderen Erhebungen oder auch von Vertiefungen, wie Nester oder dergleichen, gebildet werden.

## Patentansprüche

1. Vorrichtung (10) zum Erzeugen eines Querabstandes für und zum Abführen von insbesondere aus einer Stanze kommenden Werkstücken (12), wobei die abzuführenden Werkstücke (12) in mindestens zwei in Transportrichtung (18) parallelen Reihen (16) hintereinander ablegt werden und die Reihen (16) in Transportrichtung (18) versetzt sind, und insbesondere die Transportgeschwindigkeit aller Reihen (16) gleich ist, wobei für die Werkstücke (12) jeder Reihe (16) eine Gliederkette (28) vorgesehen ist, die jeweils eine Aufnahmestation (26) und eine Abgabestation (33) für die Werkstücke (12) aufweisen und im Bereich der Aufnahmestationen (26) und der Abgabestationen (33) die Werkstücke (12) in Transportrichtung (18) aufnehmen, transportieren und abgeben, wobei quer zur Transportrichtung (18) der Abstand (40) der Werkstücke (18) in den Abgabestationen (33) größer ist, als der Abstand (38) der Werkstücke (12) in den Aufnahmestationen (26), und die Gliederketten (28) horizontal und vertikal kurvengängig sind, **dadurch gekennzeichnet, dass** die Gliederketten (28) in Transportrichtung (18) längenvariabel sind und dass auf der Gliederkette (28) Mittel (54) vorgesehen sind, die den Reibschluss zum Werkstück (12) erhöhen oder die einen Formschluss mit dem Werkstück (12) ermöglichen.

2. Vorrichtung nach Anspruch 1, **dadurch gekennzeichnet, dass** bei wenigstens einer Gliederkette (28) der zwischen der Aufnahmestation (26) und der Abgabestation (33) sich befindende Transportabschnitt (36) einen S-förmigen Verlauf aufweist.

3. Vorrichtung nach Anspruch 2, **dadurch gekennzeichnet, dass** zwei benachbarte Transportabschnitte (36) ungleich lang sind.

4. Vorrichtung nach einem der vorhergehenden Ansprüche, **dadurch gekennzeichnet, dass** alle Abgabestationen (26) auf einer quer zur Transportrichtung (18) liegenden Linie, insbesondere rechtwinklig zur Transportrichtung (18), liegen.

5. Vorrichtung nach einem der vorhergehenden Ansprüche, **dadurch gekennzeichnet, dass** die Gliederketten (28) eine Vielzahl von Kettengliedern (30) aufweist, und die Kettenglieder (30) mit Durchbrüchen versehen sind, so dass sie von Luft durchströmbar sind.

6. Vorrichtung nach Anspruch 5, **dadurch gekennzeichnet, dass** unterhalb der Gliederkette (28) ein Saugmodul (50) vorgesehen ist.

7. Vorrichtung nach einem der vorhergehenden Ansprüche, **dadurch gekennzeichnet, dass** die Aufnahmestation (26) und die Abgabestation (33) einer jeder Gliederkette (28) die gleiche Transportgeschwindigkeit aufweisen.

8. Vorrichtung nach einem der vorhergehenden Ansprüche, **dadurch gekennzeichnet, dass** benachbarte Aufnahmestationen (26) unterschiedliche Transportgeschwindigkeiten aufweisen.

9. Vorrichtung nach einem der vorhergehenden Ansprüche, **dadurch gekennzeichnet, dass** im Anschluss an die Abgabestation (33) eine Beschleunigungsvorrichtung für die Werkstücke (12) vorgesehen ist.

10. Vorrichtung nach einem der vorhergehenden Ansprüche, **dadurch gekennzeichnet, dass** der das Werkstück (12) tragende Transportabschnitt (36) der Gliederkette (28) in der Ebene oder im Raum verläuft.

11. Vorrichtung nach einem der vorhergehenden Ansprüche, **dadurch gekennzeichnet, dass** das Werkstück (12) unterhalb, oberhalb oder seitlich an einem das Werkstück (12) tragenden Transportabschnitt (36) der Gliederkette (28) anliegt.

12. Vorrichtung nach einem der vorhergehenden Ansprüche, **dadurch gekennzeichnet, dass** die Gliederketten (28) mit gleichbleibender oder mit wechselnder Geschwindigkeit angetrieben werden.

13. Vorrichtung nach einem der vorhergehenden Ansprüche, **dadurch gekennzeichnet, dass** die Gliederketten (28) sowohl in der Aufnahmestation (26) als auch in der Abgabestation (33) angetrieben werden.

## Claims

1. A device (10) for producing a transverse spacing for and for carrying away workpieces (12), in particular arriving from a stamping press, in which the workpieces (12) to be carried away are set down in succession in at least two rows (16) parallel to one another in the conveying direction (18), and the rows (16) are offset in the conveying direction (18), and in particular the conveying speed of all the rows (16) is the same, and for the workpieces (12) of each row (16), a link chain (28) is provided, which each have a pickup station (26) and a discharge station (33) for the workpieces (12) and which pick up, convey and discharge the workpieces (12) in the conveying direction (18) in the vicinity of the pickup station (26) and the discharge station (33), and transversely to the conveying direction (18), the spacing (40) of the workpieces (12) in the discharge stations (33) is greater than the spacing (38) of the workpieces (12) in the pickup stations (26), and the link chains (28) are capable of traveling along curves horizontally and vertically, **characterized in that** the link chains (28) are variable in length in the conveying direction (18), and that means (54) which increase the friction with the workpiece (12) or make a form lock with the workpiece (12) possible are provided on the link chain (28).

2. The device of claim 1, **characterized in that** in at least one link chain (28), the conveyor segment (36) located between the pickup station (26) and the discharge station (33) has an S-shaped course.

3. The device of claim 2, **characterized in that** two adjacent conveyor segments (36) are of unequal length.

4. The device of one of the foregoing claims, **characterized in that** all the discharge stations (33) are located, in particular perpendicularly to the conveying direction (18), on a line that is transverse to the conveying direction (18).

5. The device of one of the foregoing claims, **characterized in that** the link chains (28) have a plurality of chain links (30), and the chain links (30) are provided with perforations, so that air can flow through them.

6. The device of claim 5, **characterized in that** below the link chain (28), a suction module (50) is provided.

7. The device of one of the foregoing claims, **characterized in that** the pickup station (26) and the discharge station (33) of each link chain (28) have the same conveying speed.

8. The device of one of the foregoing claims, **characterized in that** adjacent pickup stations (26) have different conveying speeds.

9. The device of one of the foregoing claims, **characterized in that** adjacent to the discharge station (33), an acceleration device for the workpieces (12) is provided.

10. The device of one of the foregoing claims, **characterized in that** the conveyor segment (36) of the link chain (28) that carries the workpiece (12) extends two- or three-dimensionally.

11. The device of one of the foregoing claims, **characterized in that** the workpiece (12) rests below, above or laterally on a conveyor segment (36) of the link chain (28) which segment carries the workpiece (12).

12. The device of one of the foregoing claims, **characterized in that** the link chains (28) are driven at a constant speed or at a varying speed.

13. The device of one of the foregoing claims, **characterized in that** the link chains (28) in both the pickup station (26) and the discharge station (33) are driven.

## Revendications

1. Dispositif (10) destiné à générer un intervalle transversal pour et à évacuer des pièces (12) provenant en particulier d'une poinçonneuse, dans lequel les pièces (12) à évacuer sont déposées les unes derrière les autres dans au moins deux rangées (16) parallèles dans la direction de transport (18) et lesdites rangées (16) sont décalées dans la direction de transport (18), et en particulier la.vitesse de transport de l'ensemble des rangées (16) est identique, pour les pièces (12) de chaque rangée (16) étant prévue une chaîne à maillons (28) qui présentent chacune un poste de réception (26) et un poste de distribution (33) pour les pièces (12) et qui, au niveau des postes de réception (26) et des postes de distribution (33), reçoivent, transportent et distribuent les pièces (12) dans la direction de transport (18), dans lequel, transversalement à la direction de transport (18), l'intervalle (40) des pièces (12) dans les postes de distribution (33) est supérieur à l'intervalle (38) des pièces (12) dans les postes de réception (26), et lesdites chaînes à maillons (28) pouvant suivre, horizontalement et verticalement, une trajectoire courbe, **caractérisé par le fait que** lesdites chaînes à maillons (28) sont variables en longueur dans la direction de transport (18) et que des moyens (54) sont prévus sur la chaîne à maillons (28), qui augmentent le contact par friction par rapport à la pièce (12) ou qui permettent un engagement positif avec la pièce (12).

2. Dispositif selon la revendication 1, **caractérisé par le fait que**, dans au moins une chaîne à maillons (28), la section de transport (36) située entre le poste de réception (26) et le poste de distribution (33) présente une allure en S.

3. Dispositif selon la revendication 2, **caractérisé par le fait que** deux sections de transport (36) voisines présentent des longueurs différentes.

4. Dispositif selon l'une quelconque des revendications précédentes, **caractérisé par le fait que** tous les postes de distribution (33) sont situés sur une ligne située transversalement à la direction de transport (18), en particulier perpendiculairement à la direction de transport (18).

5. Dispositif selon l'une quelconque des revendications précédentes, **caractérisé par le fait que** lesdites chaînes à maillons (28) présentent une pluralité de maillons (30) et que les maillons (30) sont pourvus de percées de sorte qu'ils peuvent être traversés par de l'air.

6. Dispositif selon la revendication 5, **caractérisé par le fait qu'**un module d'aspiration (50) est prévu au-dessous de ladite chaîne à maillons (28).

7. Dispositif selon l'une quelconque des revendications précédentes, **caractérisé par le fait que** le poste de réception (26) et le poste de distribution (33) de chaque chaîne à maillons (28) présentent la même vitesse de transport.

8. Dispositif selon l'une quelconque des revendications précédentes, **caractérisé par le fait que** des postes de réception (26) voisins présentent des vitesses de transport différentes.

9. Dispositif selon l'une quelconque des revendications précédentes, **caractérisé par le fait qu'**un dispositif d'accélération pour les pièces (12) est prévu en aval du poste de distribution (33).

10. Dispositif selon l'une quelconque des revendications précédentes, **caractérisé par le fait que** la section de transport (36) de la chaîne à maillons (28), qui porte la pièce (12) s'étend dans le plan ou dans l'espace.

11. Dispositif selon l'une quelconque des revendications précédentes, **caractérisé par le fait que** la pièce (12) s'applique au-dessous, au-dessus ou latéralement sur une section de transport (36) de la chaîne à maillons (28), qui porte la pièce (12).

12. Dispositif selon l'une quelconque des revendications précédentes, **caractérisé par le fait que** les chaînes à maillons (28) sont entraînées à vitesse constante ou à vitesse variable.

13. Dispositif selon l'une quelconque des revendications précédentes, **caractérisé par le fait que** les chaînes à maillons (28) sont entraînées aussi bien dans le poste de réception (26) que dans le poste de distribution (33).
